# EUROPEAN PATENT APPLICATION

(11) **EP 4 656 884 A1**
(43) Date of publication of application: **03.12.2025**
(21) Application number: 24743245.3
(22) Date of filing: 14.05.2024
(51) Int. Cl.: F04D 27/00, F04D 25/10

(54) **METHOD AND APPARATUS FOR CONTROLLING AIR-BLOWING ANGLE OF FAN ON BASIS OF HUMAN BODY ORIENTATION**

(30) Priority: 15.04.2024 CN 202410445568
(71) Applicant: Suzhou BeiAng Smart Technology Co., Ltd., Suzhou , Jiangsu 215000 (CN)
(72) Inventor: CUI, Yongqiang, Suzhou, Jiangsu 215000 (CN); ZHANG, Feipeng, Suzhou, Jiangsu 215000 (CN); XIA, Jin, Suzhou, Jiangsu 215000 (CN); CHEN, Qi, Suzhou, Jiangsu 215000 (CN)
(74) Representative: Zaboliene, Reda
(86) International application number: PCT/CN2024/093109
(87) International publication number: WO 2025/217972

(57) **Abstract**

The present application provides a method and an apparatus for controlling an air-blowing angle of a fan based on a human-body orientation, relating to the technical field of smart home appliances, and applied to a fan provided with a millimeter-wave radar unit and a sound source localization unit. On one hand, two modes of single-person perception and multi-person perception are designed, and a compensation error-correction mechanism is added for the multi-person perception mode, thereby solving the problem of detection result defect of the millimeter-wave radar unit while satisfying requirements of different scenario of the users; and on the other hand, the sound source localization technology is combined with the millimeter-wave radar detection technology, to achieve fine adjustment on the air-blowing angle of the fan and ensure accuracy of the air-blowing angle.

## Description

### CROSS-REFERENCE TO RELATED APPLICATION

The present application claims the priority to the Chinese patent application with the filing No. 2024104455688 filed with the Chinese Patent Office on April 15, 2024, and entitled "METHOD AND APPARATUS FOR CONTROLLING AIR-BLOWING ANGLE OF FAN BASED ON HUMAN-BODY ORIENTATION", the contents of which are incorporated herein by reference in entirety.

### TECHNICAL FIELD

The present application relates to the technical field of smart home appliances, and specifically to a method and an apparatus for controlling an air-blowing angle of a fan based on a human-body orientation.

### BACKGROUND ART

For a common household fan, when it is used by one person, oscillation is not started and the fan blows air at a fixed angle; when it is used by a plurality of persons, oscillation is started, and the fan oscillates back and forth to blow air in a sector-shaped area. An oscillating angle of existing fans is fixed, and some fans provide several oscillating angles for users to choose, such as 60 degrees, 90 degrees and 120 degrees. Consequently, the following situations are often encountered: when the fan is used by one person, an air-blowing angle is not directed towards human body when the fan is turned on, and the fan needs to be manually re-arranged, or the oscillation needs to be started, and after the air-blowing angle is proper, the oscillation is switched off; if the user subsequently changes position, for examples, changing seat, the air-blowing angle still needs to be manually corrected again; when the fan is used by a plurality of persons, small-angle oscillation cannot cover everyone, while a large-angle oscillation causes air to be blown to an area without anyone. That is, in scenarios where users are active, the existing fans need to be manually adjusted timely and repeatedly so as to ensure an air-blowing effect, which adds unnecessary burden to the users and is insufficient in intelligence level.

At present, although a small amount of fans are added with human-body orientation perception, there is only a single type of sensor, and functions are not flexible or rich enough. For example, the millimeter-wave radar perception sensor is a relatively novel human-body perception scheme, but due to restrictions of cost and volume, results output by radar sensors suitable for home appliances on the market are wrong in certain situations, so that the fans fail to blow air towards users, thus increasing a degree of dissatisfaction of the users.

### SUMMARY

In view of this, the present application aims at providing a method and an apparatus for controlling an air-blowing angle of a fan based on a human-body orientation, in which two human-body orientation perception technologies of millimeter-wave radar and sound source localization are introduced into the fan, so that a perception air-blowing function of the fan has higher accuracy.

In one aspect, embodiments of the present application provide a method for controlling an air-blowing angle of a fan based on a human-body orientation, applied to a fan provided with a millimeter-wave radar unit and a sound source localization unit, wherein the method includes steps of:
controlling, in response to a received single-person perception mode start instruction, the millimeter-wave radar unit to detect a single human-body target with a largest motion amplitude within a detection range thereof, and adjusting the air-blowing angle of the fan based on a target orientation of the single human-body target relative to the fan;
controlling, in response to a received multi-person perception mode start instruction, the millimeter-wave radar unit to use a provided compensation error-correction mechanism, to detect a first human-body target and a second human-body target located at outermost edges of two ends within the detection range thereof, and adjusting the air-blowing angle of the fan based on a first orientation of the first human-body target relative to the fan and a second orientation of the second human-body target relative to the fan; and
finely adjusting the air-blowing angle of the fan according to an angle-correction voice instruction received by the sound source localization unit, after adjusting the air-blowing angle of the fan based on the target orientation of the single human-body target relative to the fan or based on the first orientation of the first human-body target relative to the fan and the second orientation of the second human-body target relative to the fan.

In some embodiments, the fan further includes an orientation indication unit, to display orientations of the single human-body target, the first human-body target, and the second human-body relative to the fan.

In some embodiments, the orientation indication unit is an arc-shaped human-body orientation indication lamp strip, and indicates the orientations of the single human-body target, the first human-body target, and the second human-body relative to the fan by lighting in real time.

In some embodiments, when controlling the millimeter-wave radar unit to detect the single human-body target, the first human-body target, and the second human-body target within the detection range thereof, the method includes steps of:
judging whether a confidence degree of the detected single human-body target, first human-body target or second human-body target exceeds a set threshold;
if yes, displaying the target orientation of the single human-body target relative to the fan, the first orientation of the first human-body target relative to the fan or the second orientation of the second human-body target relative to the fan in the orientation indication unit in a constant-on manner; and
if not, displaying the target orientation of the single human-body target relative to the fan, the first orientation of the first human-body target relative to the fan or the second orientation of the second human-body target relative to the fan in the orientation indication unit in a flashing manner, so as to prompt a corresponding human body to increase a motion amplitude.

In some embodiments, the controlling the millimeter-wave radar unit to use a provided compensation error-correction mechanism to detect a first human-body target and a second human-body target located at outermost edges of two ends within the detection range thereof includes steps of:
setting a first compensation error-correction window period;
recording the first orientation of the first human-body target relative to the fan and the second orientation of the second human-body target relative to the fan detected each time by the millimeter-wave radar unit;
performing countdown according to the first compensation error-correction window period, if a currently detected first orientation of the first human-body target relative to the fan is smaller than a first orientation recorded last time or a currently detected second orientation of the second human-body target relative to the fan is smaller than a second orientation recorded last time, and replacing, when the countdown reaches zero, the first orientation recorded last time or the second orientation recorded last time with the currently detected first orientation or the currently detected second orientation; and
resetting the first compensation error-correction window period being counted down, if the currently detected first orientation of the first human-body target relative to the fan is larger than the first orientation recorded last time or the currently detected second orientation of the second human-body target relative to the fan is larger than the second orientation recorded last time, and replacing the first orientation recorded last time or the second orientation recorded last time with the currently detected first orientation or the currently detected second orientation.

In some embodiments, the step of performing countdown according to the first compensation error-correction window period if the currently detected first orientation of the first human-body target relative to the fan is smaller than the first orientation recorded last time or the currently detected second orientation of the second human-body target relative to the fan is smaller than the second orientation recorded last time and replacing when the countdown reaches zero the first orientation recorded last time or the second orientation recorded last time with the currently detected first orientation or the currently detected second orientation includes steps of:
performing countdown according to the first compensation error-correction window period, if the currently detected first orientation of the first human-body target relative to the fan is smaller than the first orientation recorded last time or the currently detected second orientation of the second human-body target relative to the fan is smaller than the second orientation recorded last time;
indicating, through the orientation indication unit, the first human-body target or the second human-body target to make body actions; and
if, during the countdown to zero, the first human-body target or the second human-body target fail to make the body actions, replacing the first orientation recorded last time or the second orientation recorded last time with the currently detected first orientation or the currently detected second orientation.

In some embodiments, the controlling the millimeter-wave radar unit to use a provided compensation error-correction mechanism to detect a first human-body target and a second human-body target located at outermost edges of two ends within the detection range thereof further includes steps of:
setting a second compensation error-correction window period;
checking whether the first human-body target and the second human-body target currently detected by the millimeter-wave radar unit are located at a detection boundary of the millimeter-wave radar unit; and
performing countdown according to the second compensation error-correction window period if the first human-body target and/or the second human-body target is located at the detection boundary, and discarding the currently detected first human-body target and/or second human-body target if during the countdown to zero, the first human-body target and/or the second human-body target is stationary all the time, and performing detection again.

In some embodiments, the sound source localization unit receives the set angle-correction voice instruction and re-determines the target orientation of the single human-body target relative to the fan, the first orientation of the first human-body target relative to the fan or the second orientation of the second human-body target relative to the fan, and the air-blowing angle of the fan is adjusted according to the target orientation, the first orientation, the second orientation re-determined by the sound source localization unit.

In some embodiments, before the step of adjusting the air-blowing angle of the fan according to the target orientation, the first orientation, the second orientation re-determined by the sound source localization unit, the method further includes steps of:
setting an angle-correction threshold; and
comparing the target orientation, the first orientation, the second orientation re-determined by the sound source localization unit for adjusting the air-blowing angle of the fan with the target orientation, the first orientation, the second orientation detected by the millimeter-wave radar unit, and if a difference between the two is greater than the angle-correction threshold, adjusting the air-blowing angle of the fan according to the target orientation, the first orientation, the second orientation detected by the millimeter-wave radar unit.

In the second aspect, embodiments of the present application provide an apparatus for controlling an air-blowing angle of a fan based on a human-body orientation, applied to a fan provided with a millimeter-wave radar unit and a sound source localization unit, wherein the apparatus includes:
a first adjustment module, configured to control, in response to a received single-person perception mode start instruction, the millimeter-wave radar unit to detect a single human-body target with a largest motion amplitude within a detection range thereof, and adjust the air-blowing angle of the fan based on a target orientation of the single human-body target relative to the fan;
a second adjustment module, configured to control, in response to a received multi-person perception mode start instruction, the millimeter-wave radar unit to use a provided compensation error-correction mechanism, to detect a first human-body target and a second human-body target located at outermost edges of two ends within the detection range thereof, and adjust the air-blowing angle of the fan based on a first orientation of the first human-body target relative to the fan and a second orientation of the second human-body target relative to the fan; and
a fine-adjustment module, configured to finely adjust the air-blowing angle of the fan according to an angle-correction voice instruction received by the sound source localization unit, after adjusting the air-blowing angle of the fan based on the target orientation of the single human-body target relative to the fan or based on the first orientation of the first human-body target relative to the fan and the second orientation of the second human-body target relative to the fan.

In some embodiments, the apparatus further includes:
a judgment module, configured to judge whether a confidence degree of the detected single human-body target, first human-body target or second human-body target exceeds a set threshold, when controlling the millimeter-wave radar unit to detect the single human-body target, the first human-body target, and the second human-body target within the detection range thereof; if yes, display the target orientation of the single human-body target relative to the fan, the first orientation of the first human-body target relative to the fan or the second orientation of the second human-body target relative to the fan in the orientation indication unit in a constant-on manner; and if not, display the target orientation of the single human-body target relative to the fan, the first orientation of the first human-body target relative to the fan or the second orientation of the second human-body target relative to the fan in the orientation indication unit in a flashing manner, so as to prompt a corresponding human body to increase a motion amplitude.

In the third aspect, embodiments of the present application provide an electronic device, including a processor, a memory and a bus, wherein the memory stores a machine-readable instruction executable by the processor, when the electronic device runs, the processor and the memory communicate with each other through the bus, and when the machine-readable instruction is executed by the processor, the method for controlling an air-blowing angle of a fan based on a human-body orientation according to any one of the first aspect above is implemented.

In the fourth aspect, embodiments of the present application provide a computer-readable storage medium, wherein the computer-readable storage medium stores a computer program, and when the computer program is executed by the processor, the method for controlling an air-blowing angle of a fan based on a human-body orientation according to any one of the first aspect above is implemented.

In the method and apparatus for controlling an air-blowing angle of a fan based on a human-body orientation provided by the present application, on one hand, the two modes of single-person perception and multi-person perception are designed, and the compensation error-correction mechanism is added for the multi-person perception mode, thereby solving the problem of detection result defect of the millimeter-wave radar unit while satisfying requirements of different scenario of the users; and on the other hand, the sound source localization technology is combined with the millimeter-wave radar detection technology, to achieve the fine adjustment on the air-blowing angle of the fan and ensure the accuracy.

### BRIEF DESCRIPTION OF DRAWINGS

In order to more clearly illustrate the technical solutions of embodiments of the present application, the drawings which need to be used in the embodiments will be briefly introduced below. It should be understood that the drawings merely show some embodiments of the present application, and thus should not be considered as limitation to the scope. Those ordinarily skilled in the art still could obtain other relevant drawings according to these drawings, without using inventive efforts.
FIG. 1 shows a flowchart of a method for controlling an air-blowing angle of a fan based on a human-body orientation according to embodiments of the present application;
FIG. 2 shows a schematic view of a millimeter-wave radar determining a single target according to embodiments of the present application;
FIG. 3 shows a schematic view of occurrence of loss when the millimeter-wave radar determines a plurality of human-body targets according to embodiments of the present application;
FIG. 4 shows a schematic view of an existing fan that can track a human body to blow air;
FIG. 5 shows a schematic view of an orientation indication unit according to embodiments of the present application;
FIG. 6 shows a schematic view of angles of a human-body orientation indication lamp strip according to embodiments of the present application;
FIG. 7 shows a schematic view of displaying of the human-body orientation indication lamp strip in a single-person perception mode according to embodiments of the present application;
FIG. 8 shows a schematic view of displaying of the human-body orientation indication lamp strip in a multi-person perception mode according to embodiments of the present application;
FIG. 9 shows a flowchart of a compensation error-correction mechanism used in embodiments of the present application;
FIG. 10 shows a structural schematic view of an apparatus for controlling an air-blowing angle of a fan based on a human-body orientation according to embodiments of the present application; and
FIG. 11 shows a structural block diagram of an electronic device according to embodiments of the present application.

### DETAILED DESCRIPTION OF EMBODIMENTS

In order to make objectives, technical solutions and advantages of the embodiments of the present application clearer, the technical solutions in the embodiments of the present application will be described clearly and completely below in conjunction with the drawings in the embodiments of the present application. It should be understood that the drawings in the present application are merely for the illustrative and descriptive purpose, rather than limiting the scope of protection of the present application. Besides, it should be understood that the schematic drawings are not drawn to scale. The flowcharts used in the present application show operations implemented according to some embodiments of the present application. It should be understood that the operations in the flowcharts may be implemented out of order, and steps without a logical relationship may be reversed in order or simultaneously implemented. In addition, those skilled in the art, guided by contents of the present application, could add one or more other operations to the flowcharts, or remove one or more operations from the flowcharts.

Besides, only some but not all embodiments of the present application are described. Generally, components of the embodiments of the present application described and shown in drawings herein may be arranged and designed in a variety of different configurations. Therefore, the following detailed description of the embodiments of the present application provided in the drawings is not intended to limit the scope of protection of the present application, but merely represents chosen embodiments of the present application. Based on the embodiments of the present application, all of other embodiments obtained by those ordinarily skilled in the art without using inventive efforts shall fall within the scope of protection of the present application.

It should be noted that the term "include" will be used in the embodiments of the present application to indicate the existence of features specified thereafter, but not to exclude adding other features.

In view of the technical problems raised in the BACKGROUND ART, the present application provides a method and an apparatus for controlling an air-blowing angle of a fan based on a human-body orientation, in which two human-body orientation perception technologies of millimeter-wave radar and sound source localization are introduced into the fan, so that a perception air-blowing function of the fan has higher accuracy.

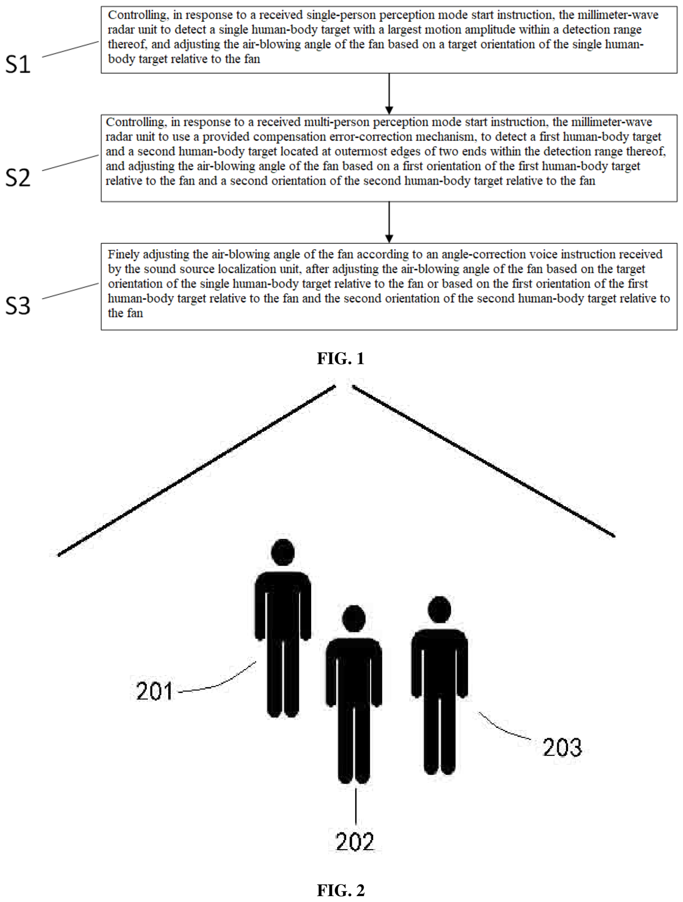

Referring to FIG. 1 of the description, the method for controlling an air-blowing angle of a fan based on a human-body orientation provided in embodiments of the present application is applied to a fan provided with a millimeter-wave radar unit and a sound source localization unit. The method includes the following steps:
S1, controlling, in response to a received single-person perception mode start instruction, the millimeter-wave radar unit to detect a single human-body target with a largest motion amplitude within a detection range thereof, and adjusting the air-blowing angle of the fan based on a target orientation of the single human-body target relative to the fan;
S2, controlling, in response to a received multi-person perception mode start instruction, the millimeter-wave radar unit to use a provided compensation error-correction mechanism, to detect a first human-body target and a second human-body target located at outermost edges of two ends within the detection range thereof, and adjusting the air-blowing angle of the fan based on a first orientation of the first human-body target relative to the fan and a second orientation of the second human-body target relative to the fan; and
S3, finely adjusting the air-blowing angle of the fan according to an angle-correction voice instruction received by the sound source localization unit, after adjusting the air-blowing angle of the fan based on the target orientation of the single human-body target relative to the fan or based on the first orientation of the first human-body target relative to the fan and the second orientation of the second human-body target relative to the fan.

That is, in the present application, firstly, the orientation of the human-body target relative to the fan is detected by the millimeter-wave radar unit, thereby primarily adjusting the air-blowing angle of the fan, and then in conjunction with the sound source localization technology, the air-blowing angle of the fan is finely adjusted, so that the perception air-blowing function of the fan has higher accuracy. Moreover, in the present application, two modes of single-person perception and multi-person perception are designed, and the compensation error-correction mechanism is further used for the multi-person perception mode, thus solving the problem that a detection result of the millimeter-wave radar unit is defective due to its own characteristics, while satisfying requirements of different scenarios of users.

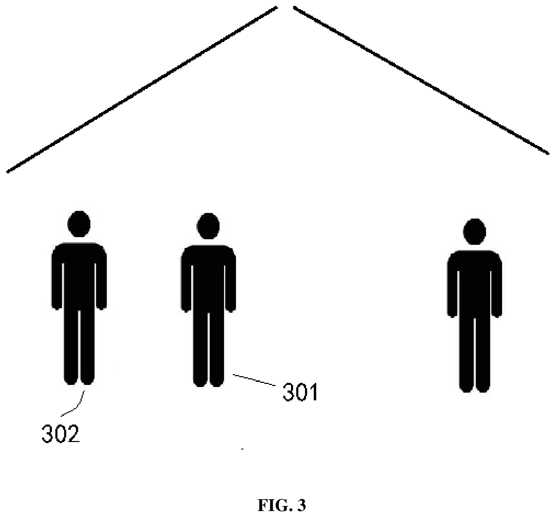

Currently, as a millimeter-wave radar for home-appliance scenarios has a low cost and a small volume, in order to clearly comprehend the technical solutions of the embodiments of the present application, defects existing in raw perception-result data collected by the millimeter-wave radar used in the home-appliance scenarios may be illustrated first. Specific defects include following three situations:
(1) With reference to FIG. 2 of the description, 201, 202 and 203 in the drawing represent three users in close proximity to each other. If 202 represents a user in close proximity with the largest action amplitude, the millimeter-wave radar will determine that there exists a human body in an orientation corresponding to user 202, and will not determine that there also exist human bodies in orientations corresponding to user 201 and user 203. Similarly, if 201 represents a user in close proximity with the largest action amplitude, it determines that there exists a person in the orientation corresponding to the user 201; if 203 represents a user in close proximity with the largest action amplitude, it determines that there exists a person in the orientation corresponding to the user 203. Therefore, two or three persons in close proximity to each other are easy to be determined as a single target by the millimeter-wave radar, and only a human body with the largest action amplitude is identified.
(2) For a plurality of human-body targets successfully identified, the human-body target with the largest motion amplitude easily covers those with a small motion amplitude around, that is, the number of detected targets is less than an actual number. With reference to FIG. 3 of the description, it is assumed that the millimeter-wave radar has successfully perceived orientations of three human bodies, and if a user 301 has a certain amplitude of action and a user 302 has slight action or is stationary, the millimeter-wave radar has a certain probability of losing perception for the user 302; and
(3) For a human body passing or walking out of the detection range of the millimeter-wave radar, at a boundary of the detection range, the millimeter-wave radar has a certain probability of failing to perceive that this human body has walked out of the boundary, a pseudo target may be stationary at the boundary, but in fact there exists no person in this orientation.

Therefore, raw perception-result data collected by the millimeter-wave radar unit must be optimized in the present application. However, it can be found from the above that there is an irreconcilable contradiction between detection of a single person and detection of a plurality of persons by the millimeter-wave radar unit, wherein if the optimization is biased towards the single human-body detection, a scenario where a plurality of persons use the fan is more likely to have an error that a plurality of human targets cannot be perceived; and on the contrary, if the multi-person detection is optimized, errors of single-person perception are increased. Therefore, the present application designs two modes of single-person tracking air-blowing and multi-person tracking air-blowing. Moreover, it is to be noted that in the present application, for the single-person mode, the millimeter-wave radar unit only tracks a single human-body target with the largest motion amplitude within the detection range thereof, is not additionally added with a compensation correction algorithm, and directly uses the raw perception-result data; but for the multi-person mode, the set compensation error-correction mechanism needs to be added. Thus, the experience of a plurality of users simultaneously using the fan is improved, and normal operation in a single-person scenario is ensured.

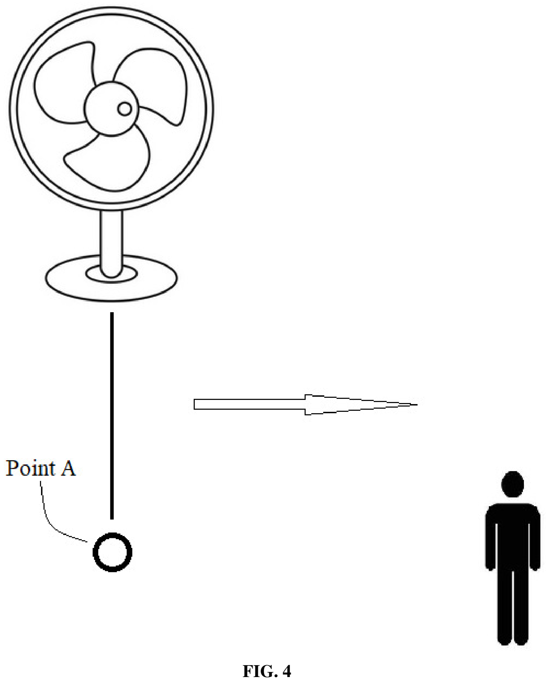

Optionally, with reference to FIG. 4 of the description, FIG. 4 of the description reflects a typical situation of an existing fan capable of tracking a human body to blow air. In the above, a point A is a current air-blowing direction of the fan, and after a human-body position is detected, an oscillating mechanism of the fan rotates according to a direction of the arrow. However, movement of the oscillating mechanism is relatively slow and takes time, where the farther the point A is from the position of the human body, the longer the time is. Thus, in this process, the user cannot know the accuracy of the fan detecting his/her own position and may have certain doubt, thus leading to poor use experience. Therefore, in the present application, the fan is further provided with an orientation indication unit configured to display a detected human-body orientation.

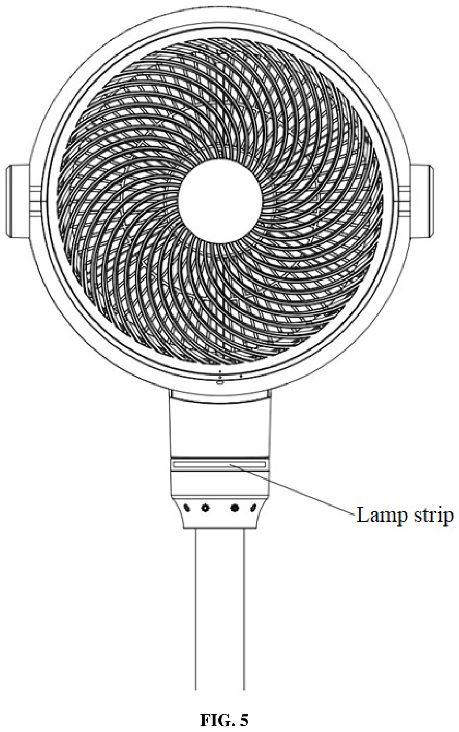

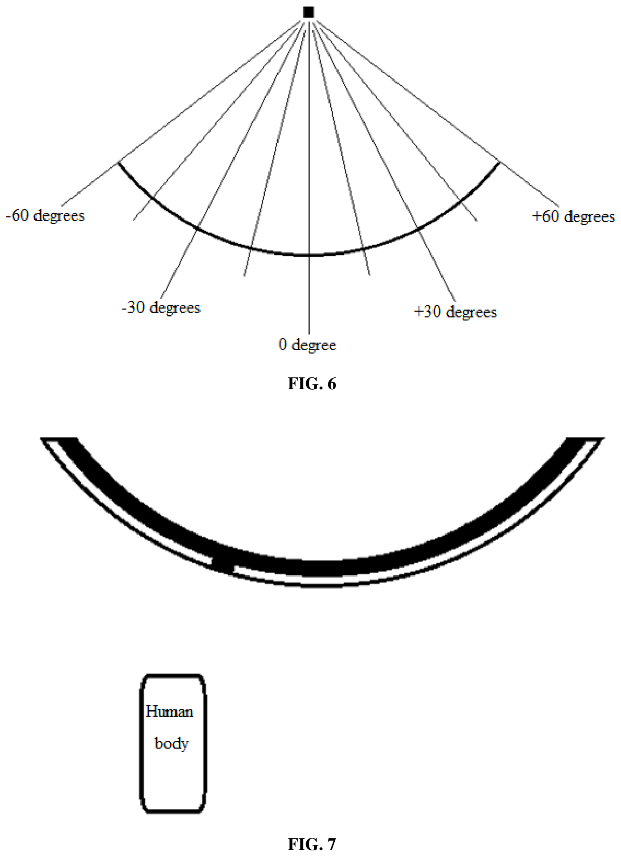

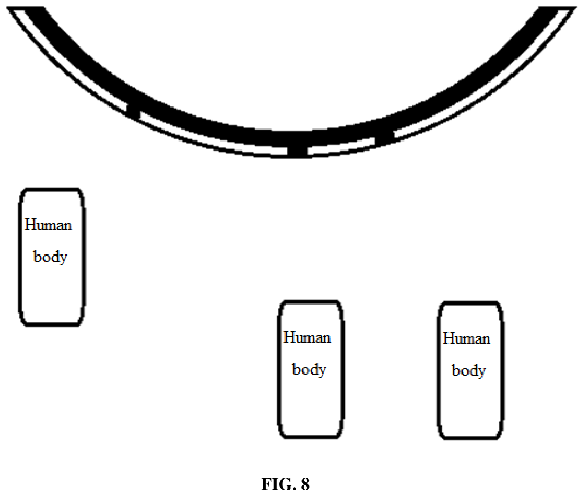

In an embodiment, with reference to FIG. 5 of the description, the orientation indication unit is designed as an arc-shaped human-body orientation indication lamp strip, and indicates the target orientation by lighting in real time. Even if the oscillating mechanism has yet not blown air towards the user, the user still can see target indication in real time and can know that the fan has accurately detected his/her position, thus eliminating the user's doubt and improving experience feeling. Specifically, with reference to FIG. 6 of the description, a radian included by the human-body orientation indication lamp strip is 120°, corresponding to a maximum angle of left-right oscillation of the oscillating mechanism of the fan. Moreover, the human-body orientation indication lamp strip includes a background layer and a foreground layer, wherein the background layer and the foreground layer are displayed in different colors, wherein the background layer is always lighted to show the user a human-body detection range; and the foreground layer is configured to indicate the human-body orientation, where a lighted point represents existence of human body. For example, with reference to FIG. 7 of the description, it is a schematic view of displaying of the human-body orientation indication lamp strip in the single-person perception mode, in which only one point in the foreground layer lights up, configured to represent that there exists a human body in this orientation. With reference to FIG. 8 of the description, it is a schematic view of displaying of the human-body orientation indication lamp strip in the multi-person perception mode, in which three points in the foreground layer light up, configured to represent that there exist three human bodies.

In addition, as the millimeter-wave radar unit used by the fan is restricted by a factor of cost, if the motion amplitude of the human body is not large, the human-body target cannot be detected, or whether it is a human-body target cannot be accurately judged, that is, there is a case where the target has a low confidence degree. Therefore, for a human-body target with the confidence degree lower than a set threshold, the user is prompted by flashing of a point lamp in the foreground layer, so that the user performs some obvious body actions to increase the confidence degree until the flashing of the point lamp turns to be always on. On one hand, a detection result of human-body orientation is well reflected, and on the other hand, an interaction effect with the user is improved.

Specifically, in step S1, the single-person perception mode start instruction may be generated by the user through a remote controller, voice control or body key selection according to a current usage situation, and then after the fan receives the single-person perception mode start instruction, regardless of whether the user is in number of one or plural, by controlling the millimeter-wave radar unit to detect the single human-body target with the largest motion amplitude within the detection range thereof, and displaying in the orientation indication unit the target orientation of the detected single human-body target relative to the fan, the air-blowing angle of the fan is directly adjusted according to the target orientation, without using the compensation error-correction mechanism.

In step S2, the multi-person perception mode start instruction may be generated by the user through a remote controller, voice control or body key selection according to a current usage situation, and then after the fan receives the multi-person perception mode start instruction, by controlling the millimeter-wave radar unit to detect human-body targets within the detection range thereof, displaying in the orientation indication unit the target orientations of the detected plurality of human-body targets relative to the fan, and using the compensation error-correction mechanism, the oscillating mechanism of the fan is controlled to blow air within an included angle formed by the detected first human-body target and second human-body target at the outermost edges of two ends, so as to ensure that each person is blown to by the fan.

During practical use in the multi-person perception mode, the number and positions of persons using the fan are likely to change, so in order to ensure that the fan oscillates and blows air at the maximum angle all the time, the millimeter-wave radar unit needs to collect the raw perception-result data in real time or at a set frequency, and optimize the same, i.e., using the compensation error-correction mechanism, so as to ensure the accuracy of the first human-body target and the second human-body target at the outermost edges of the two ends.

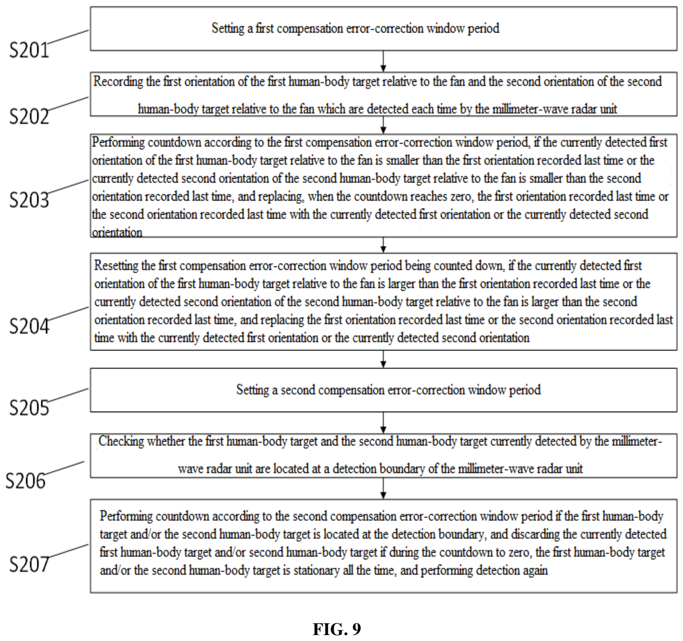

With reference to FIG. 9 of the descriptions, the compensation error-correction mechanism used includes the following steps:
S201, setting a first compensation error-correction window period;
S202, recording the first orientation of the first human-body target relative to the fan and the second orientation of the second human-body target relative to the fan which are detected each time by the millimeter-wave radar unit;
S203, performing countdown according to the first compensation error-correction window period, if the currently detected first orientation of the first human-body target relative to the fan is smaller than the first orientation recorded last time or the currently detected second orientation of the second human-body target relative to the fan is smaller than the second orientation recorded last time, and replacing, when the countdown reaches zero, the first orientation recorded last time or the second orientation recorded last time with the currently detected first orientation or the currently detected second orientation;
S204, resetting the first compensation error-correction window period being counted down, if the currently detected first orientation of the first human-body target relative to the fan is larger than the first orientation recorded last time or the currently detected second orientation of the second human-body target relative to the fan is larger than the second orientation recorded last time, and replacing the first orientation recorded last time or the second orientation recorded last time with the currently detected first orientation or the currently detected second orientation;
S205, setting a second compensation error-correction window period;
S206, checking whether the first human-body target and the second human-body target currently detected by the millimeter-wave radar unit are located at a detection boundary of the millimeter-wave radar unit; and
S207, performing countdown according to the second compensation error-correction window period if the first human-body target and/or the second human-body target is located at the detection boundary, and discarding the currently detected first human-body target and/or second human-body target if during the countdown to zero, the first human-body target and/or the second human-body target is stationary all the time, and performing detection again.

Specifically, in step S201 to step S204, the first compensation error-correction window period is set to be three minutes, and meanwhile, in the raw perception-result data currently collected by the millimeter-wave radar unit, let a first human-body target P1 be located at a leftmost angle of -30°, and a second human-body target Q1 be located at a rightmost angle of +30°, that is, the air-blowing angle of the oscillating mechanism of the fan is (-30°, +30°).

If a first human-body target P1' located at a leftmost angle of -20° is detected in a next detection cycle of the millimeter-wave radar unit, that is, the first human-body target P1 located at the leftmost angle of -30° is not detected, the countdown starts to be performed according to three minutes of the first compensation error-correction window period, the first human-body target P1 is determined as a human-body target with a low confidence degree, and the first human-body target P1 is prompted by the flashing of the point lamp in the foreground layer of the position indication unit, so as to make the user do some obvious body actions to increase the confidence degree.

If the first human-body target P1 makes some obvious body actions within the three minutes of the first compensation error-correction window and is detected by the millimeter-wave radar unit, the point lamp representing the orientation of the first human-body target P1 in the foreground layer of the orientation indication unit is changed from a flashing state to a constant-on state.

If the first human-body target P1 does not appear within the three minutes of the first compensation error-correction window period, or does not make some obvious body actions detected by the millimeter-wave radar unit, the first human-body target P1 located at the leftmost angle of -30° is discarded, and -20° corresponding to the first human-body target P1' is taken as a latest leftmost angle, that is, the air-blowing angle of the oscillating mechanism of the fan is adjusted to be (-20°, +30°). In the above, it should be noted that, before the first human-body target P1 located at the leftmost angle -30° is discarded, the air-blowing angle of the oscillating mechanism of the fan remains to be (-30°, +30°).

In the above, the compensation error-correction mechanism used for the second human-body target Q1 located at the rightmost angle is the same as that used for the first human-body target P1 located at the leftmost angle, and is not repeated herein.

Optionally, in step S204 to step S207, the second compensation error-correction window period is also set to be three minutes for solving the defect that a pseudo target is stationary at the detection boundary of the millimeter-wave radar unit. For example, in the above embodiment, if the determined first human-body target P1 is located at the leftmost angle of -30° and is not at a left detection boundary -60° of the millimeter-wave radar unit, steps S204 to S207 are no longer carried out. But if a determined first human-body target P2 is located at the left detection boundary -60°of the millimeter-wave radar unit, and the second human-body target Q2 is located at a rightmost angle of +40°, whether the first human-body target P2 is in a stationary state needs to be continuously monitored within the three minutes of the second compensation error-correction window period. If the first human-body target P2 is always in the stationary state within the three minutes of the second compensation error-correction window period, then when the countdown of the three minutes of the second compensation error-correction window period reaches zero, the first human-body target P2 located at -60° is discarded; and if motion of the first human-body target P2 is monitored within the three minutes of the second compensation error-correction window period, the leftmost angle of -60° where the first human-body target P2 is located is determined as a real value, and the air-blowing angle of the oscillating mechanism of the fan is adjusted to be (-60°, +40°).

In step S3, although the problem of defects of the millimeter-wave radar unit due to its own characteristics can be overcome by using the compensation error-correction mechanism, a relatively accurate air-blowing angle still cannot be achieved. This is because the millimeter-wave radar perceives movement characteristics in principle, while the human body is a plane rather than a point, so an orientation angle determined by the millimeter-wave radar may be for an arm or a leg of the human body with the largest motion amplitude, and thus the fan is caused to blow air to the arm or the leg, while trunk and head are not blown to. However, in most cases, the users use the fan to blow to the trunk and the head, so as to cool down. Based on this, the present application introduces the sound source localization unit to be combined with the millimeter-wave radar unit. In this way, when the user finds that the air-blowing angle of the fan is improper, he/she can speak to the fan, an orientation angle of the speaker is analyzed by the sound source localization unit, and as the sound comes from mouth, a result of sound source localization must fit well with the head and body trunk.

For example, in the single-person perception mode, the set angle-correction voice instruction may be "Correct angle", and when the user says "Correct angle" to the fan, the sound source localization unit can re-determine the orientation of the single human-body target previously detected, and finely adjust the air-blowing angle of the fan according to the re-determined orientation. Compared with the single-person perception mode, the multi-person perception mode distinguishes correction to the left and correction to the right, the set angle-correction voice instruction may be "Correct angle to the left" or "Correct angle to the right", and when the user says "Correct angle to the left" or "Correct angle to the right" to the fan, the sound source localization unit can re-determine the orientation of the first human-body target or second human-body target previously detected, and finely adjust the air-blowing angle of the fan according to the re-determined orientation.

In the above, it should be noted that the sound source localization unit only implements fine adjustment on the air-blowing angle. If the target orientation, the first orientation, and the second orientation re-determined by the sound source localization unit are quite different from the target orientation, the first orientation and the second orientation determined by the millimeter-wave radar unit, that is, exceeding a set angle-correction threshold, it indicates that the user moves, and then the fan continues to adjust the air-blowing angle of the fan according to the target orientation, the first orientation, and the second orientation determined by the millimeter-wave radar unit.

It can thus be seen that in the method for controlling an air-blowing angle of a fan based on a human-body orientation provided by the present application, on one hand, the two modes of single-person perception and multi-person perception are designed, and the compensation error-correction mechanism is added for the multi-person perception mode, thereby solving the problem of detection result defect of the millimeter-wave radar unit while satisfying requirements of different scenario of the users; and on the other hand, the sound source localization technology is combined with the millimeter-wave radar detection technology, to achieve the fine adjustment on the air-blowing angle of the fan and ensure the accuracy.

Based on the same inventive concept, the embodiments of the present application further provide an apparatus for controlling an air-blowing angle of a fan based on a human-body orientation. As the principle of the apparatus in the embodiments of the present application for solving the problem is similar to that of the above method for controlling an air-blowing angle of a fan based on a human-body orientation in the embodiments of the present application, reference can be made to the implementation of the method for the implementation of the apparatus, and repetition will not be made herein.

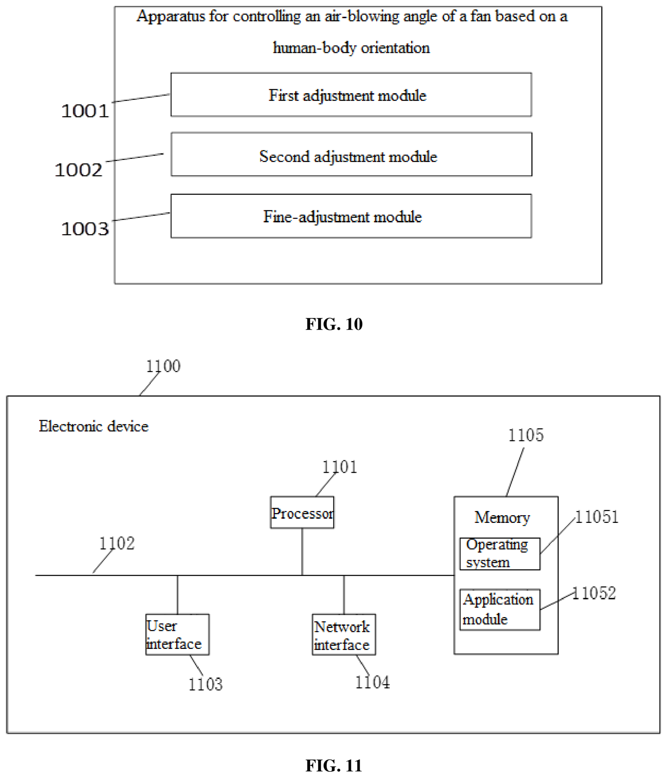

As shown in FIG. 10 of the description, the present application further provides an apparatus for controlling an air-blowing angle of a fan based on a human-body orientation, applied to a fan provided with a millimeter-wave radar unit and a sound source localization unit. The apparatus includes:
a first adjustment module 1001, configured to control, in response to a received single-person perception mode start instruction, the millimeter-wave radar unit to detect a single human-body target with a largest motion amplitude within a detection range thereof, and adjust the air-blowing angle of the fan based on a target orientation of the single human-body target relative to the fan;
a second adjustment module 1002, configured to control, in response to a received multi-person perception mode start instruction, the millimeter-wave radar unit to use a provided compensation error-correction mechanism, to detect a first human-body target and a second human-body target located at outermost edges of two ends within the detection range thereof, and adjust the air-blowing angle of the fan based on a first orientation of the first human-body target relative to the fan and a second orientation of the second human-body target relative to the fan; and
a fine-adjustment module 1003, configured to finely adjust the air-blowing angle of the fan according to an angle-correction voice instruction received by the sound source localization unit, after adjusting the air-blowing angle of the fan based on the target orientation of the single human-body target relative to the fan or based on the first orientation of the first human-body target relative to the fan and the second orientation of the second human-body target relative to the fan.

In some embodiments, the fan further includes an orientation indication unit to display orientations of the single human-body target, the first human-body target, and the second human body relative to the fan.

In some embodiments, the apparatus further includes a judgment module, configured to judge whether a confidence degree of the single human-body target, the first human-body target or the second human-body target detected exceeds a set threshold, when controlling the millimeter-wave radar unit to detect the single human-body target, the first human-body target, and the second human-body target within the detection range thereof; if yes, display the target orientation of the single human-body target relative to the fan, the first orientation of the first human-body target relative to the fan or the second orientation of the second human-body target relative to the fan in the orientation indication unit in a constant-on manner; and if not, display the target orientation of the single human-body target relative to the fan, the first orientation of the first human-body target relative to the fan or the second orientation of the second human-body target relative to the fan in the orientation indication unit in a flashing manner, so as to prompt a corresponding human body to increase a motion amplitude.

In some embodiments, the second adjustment module 1002 controlling the millimeter-wave radar unit to use a provided compensation error-correction mechanism to detect a first human-body target and a second human-body target located at outermost edges of two ends within the detection range thereof includes: setting a first compensation error-correction window period; recording the first orientation of the first human-body target relative to the fan and the second orientation of the second human-body target relative to the fan detected each time by the millimeter-wave radar unit; performing countdown according to the first compensation error-correction window period, if the currently detected first orientation of the first human-body target relative to the fan is smaller than the first orientation recorded last time or the currently detected second orientation of the second human-body target relative to the fan is smaller than the second orientation recorded last time, and replacing, when the countdown reaches zero, the first orientation recorded last time or the second orientation recorded last time with the currently detected first orientation or the currently detected second orientation; and resetting the first compensation error-correction window period being counted down, if the currently detected first orientation of the first human-body target relative to the fan is larger than the first orientation recorded last time or the currently detected second orientation of the second human-body target relative to the fan is larger than the second orientation recorded last time, and replacing the first orientation recorded last time or the second orientation recorded last time with the currently detected first orientation or the currently detected second orientation; and
setting a second compensation error-correction window period; checking whether the first human-body target and the second human-body target currently detected by the millimeter-wave radar unit are located at a detection boundary of the millimeter-wave radar unit; and performing, if the first human-body target and/or the second human-body target is located at the detection boundary, countdown according to the second compensation error-correction window period, and discarding the currently detected first human-body target and/or second human-body target if during the countdown to zero, the first human-body target and/or the second human-body target is stationary all the time, and performing detection again.

In some embodiments, the second adjustment module 1002 performing countdown according to the first compensation error-correction window period if the currently detected first orientation of the first human-body target relative to the fan is smaller than the first orientation recorded last time or the currently detected second orientation of the second human-body target relative to the fan is smaller than the second orientation recorded last time and replacing when the countdown reaches zero the first orientation recorded last time or the second orientation recorded last time with the currently detected first orientation or the currently detected second orientation includes: performing countdown according to the first compensation error-correction window period, if the currently detected first orientation of the first human-body target relative to the fan is smaller than the first orientation recorded last time or the currently detected second orientation of the second human-body target relative to the fan is smaller than the second orientation recorded last time; indicating, through the orientation indication unit, the first human-body target or the second human-body target to make body actions; and if during the countdown to zero, the first human-body target or the second human-body target fail to make the body actions, replacing the first orientation recorded last time or the second orientation recorded last time with the currently detected first orientation or the currently detected second orientation.

In some embodiments, by the sound source localization unit receiving the set angle-correction voice instruction and re-determining the target orientation of the single human-body target relative to the fan, the first orientation of the first human-body target relative to the fan or the second orientation of the second human-body target relative to the fan, the fine-adjustment module 1003 adjusts the air-blowing angle of the fan according to the target orientation, the first orientation, or the second orientation re-determined by the sound source localization unit.

In some embodiments, before the fine-adjustment module 1003 adjusts the air-blowing angle of the fan according to the target orientation, the first orientation, or the second orientation re-determined by the sound source localization unit, it further includes: setting an angle-correction threshold; and comparing the target orientation, the first orientation, or the second orientation re-determined by the sound source localization unit for adjusting the air-blowing angle of the fan with the target orientation, the first orientation, or the second orientation detected by the millimeter-wave radar unit, and if a difference between the two is greater than the angle-correction threshold, adjusting the air-blowing angle of the fan according to the target orientation, the first orientation, or the second orientation detected by the millimeter-wave radar unit.

In the apparatus for controlling an air-blowing angle of a fan based on a human-body orientation provided by the present application, on one hand, the two modes of single-person perception and multi-person perception are designed, and the compensation error-correction mechanism is added for the multi-person perception mode, thereby solving the problem of detection result defect of the millimeter-wave radar unit while satisfying requirements of different scenario of the users; and on the other hand, the sound source localization technology is combined with the millimeter-wave radar detection technology, to achieve the fine adjustment on the air-blowing angle of the fan and ensure the accuracy.

Based on the same inventive concept of the present application, as shown in FIG. 11 of the description, embodiments of the present application provide a structure of an electronic device 1100, wherein the electronic device 1100 includes: at least one processor 1101, at least one network interface 1104 or other user interfaces, a memory 1105, and at least one communication bus 1102. The communication bus 1102 is configured to enable communication between these components. The electronic device 1100 optionally includes the user interface 1103, which includes a display device (for example, a touchscreen, an LCD, a CRT, a holographic imager or a projector), a keyboard or a click device (for example, a mouse, a trackball, a touch panel or a touchscreen).

The memory 1105 may include a read-only memory and a random access memory, and provides an instruction and data for the processor 1101. A part of the memory 1105 may also include a non-volatile random access memory (NVRAM).

In some embodiments, the memory 1105 stores the following elements: a protectable module or a data structure, or a subset thereof, or an extension set thereof:
an operating system 11051, containing various system programs, configured to implement various basic services and process hardware-based tasks;
an application module 11052, containing various application programs, such as a launcher, a media player, and a browser, configured to implement various application services.

In the embodiments of the present application, by calling the program or instruction stored by the memory 1105, configuring the processor 1101 to execute the method for controlling an air-blowing angle of a fan based on a human-body orientation, and introducing the two human-body orientation perception technologies of millimeter-wave radar and sound source localization, the perception air-blowing function of the fan has higher accuracy.

The present application further provides a computer-readable storage medium, wherein the computer-readable storage medium stores a computer program, and when the computer program is executed by the processor, the method for controlling an air-blowing angle of a fan based on a human-body orientation is implemented.

Specifically, the storage medium can be a general-purpose storage medium, for example, a removable magnetic disk and a hard disk, and when the computer program on the storage medium is run, the above method for controlling an air-blowing angle of a fan based on a human-body orientation can be implemented

In the embodiments provided by the present application, it should be understood that the apparatus and the method disclosed may be implemented in other ways. The apparatus embodiments described in the above are merely exemplary, for example, units are merely divided according to logical functions, but they may be divided in other ways in practical implementation, for another example, a plurality of units or components may be combined or may be integrated into another system, or some features may be omitted, or not executed. In addition, mutual coupling or direct coupling or communication connection as shown or discussed may be indirect coupling or communication connection via some communication interfaces, means or units, and may be in an electrical form, a mechanical form or other forms.

The units described as separate parts may be or also may not be physically separated, the parts displayed as units may be or also may not be physical units, i.e., they may be located at one place, or may also be distributed on a plurality of network units. Some or all of the units may be selected according to actual needs to achieve the purpose of the solution in the present embodiment.

Besides, various functional units in the embodiments of the present application may be integrated into one processing unit, or each unit may also exist in a physically independent way, or two or more than two units may be integrated into one unit.

If the function is realized in a form of software functional unit and is sold or used as an independent product, it may be stored in one computer-readable storage medium. Based on such understanding, the technical solutions of the present application in essence or parts making contribution to the prior art or parts of the technical solutions can be embodied in a form of software product, and this computer software product is stored in a storage medium, including several instructions for making one computer device (which can be a personal computer, a server or a network device etc.) execute all or part of the steps of the methods of various embodiments of the present application. The aforementioned storage medium includes various media in which program codes can be stored, such as USB flash disk, portable hard disk, read-only memory (ROM), random access memory (RAM), magnetic disk or optical disk.

Finally, it should be noted that the above-mentioned embodiments are only specific embodiments of the present application, and are used for illustrating the technical solutions of the present application, rather than limiting the same, and the scope of protection of the present application is not limited thereto. While the present application is disclosed in detail with reference to the foregoing embodiments, those ordinarily skilled in the art should understand that any skilled person familiar with the present art still could make modifications to the technical solutions described in the foregoing embodiments, could readily conceive of changes, or make equivalent substitutions to some of the technical features, within the technical scope disclosed in the present application; however, these modifications, changes or substitutions do not make the essence of corresponding technical solutions depart from the spirit or scope of the technical solutions of the embodiments in the present application, and all of them should be covered within the scope of protection of the present application. Therefore, the scope of protection of the present application should be determined by the scope of protection of the claims.

### INDUSTRIAL APPLICABILITY

To sum up, the present application provides a method and an apparatus for controlling an air-blowing angle of a fan based on a human-body orientation, in which two modes of single-person perception and multi-person perception are designed, and the compensation error-correction mechanism is further used for the multi-person perception mode, thus solving the problem that the detection result of the millimeter-wave radar unit is defective due to its own characteristics, while satisfying requirements of different scenarios of the users.

## Claims

1. A method for controlling an air-blowing angle of a fan based on a human-body orientation, applicable to a fan provided with a millimeter-wave radar unit and a sound source localization unit, wherein the method comprises steps of:
controlling, in response to a received single-person perception mode start instruction, the millimeter-wave radar unit to detect a single human-body target with a largest motion amplitude within a detection range thereof, and adjusting the air-blowing angle of the fan based on a target orientation of the single human-body target relative to the fan;
controlling, in response to a received multi-person perception mode start instruction, the millimeter-wave radar unit to use a provided compensation error-correction mechanism, to detect a first human-body target and a second human-body target located at outermost edges of two ends within the detection range thereof, and adjusting the air-blowing angle of the fan based on a first orientation of the first human-body target relative to the fan and a second orientation of the second human-body target relative to the fan; and
finely adjusting the air-blowing angle of the fan according to an angle-correction voice instruction received by the sound source localization unit, after adjusting the air-blowing angle of the fan based on the target orientation of the single human-body target relative to the fan or based on the first orientation of the first human-body target relative to the fan and the second orientation of the second human-body target relative to the fan.

2. The method for controlling an air-blowing angle of a fan based on a human-body orientation according to claim 1, wherein the fan further comprises an orientation indication unit, to display orientations of the single human-body target, the first human-body target, and the second human-body relative to the fan.

3. The method for controlling an air-blowing angle of a fan based on a human-body orientation according to claim 2, wherein the orientation indication unit is an arc-shaped human-body orientation indication lamp strip, configured to indicate the orientations of the single human-body target, the first human-body target, and the second human-body relative to the fan by lighting in real time.

4. The method for controlling an air-blowing angle of a fan based on a human-body orientation according to claim 2, when controlling the millimeter-wave radar unit to detect the single human-body target, the first human-body target, and the second human-body target within the detection range thereof, comprising steps of:
judging whether a confidence degree of the detected single human-body target, the detected first human-body target or the detected second human-body target exceeds a set threshold;
if yes, displaying in the orientation indication unit the target orientation of the single human-body target relative to the fan, the first orientation of the first human-body target relative to the fan or the second orientation of the second human-body target relative to the fan, in a constant-on manner; and
if not, displaying in the orientation indication unit the target orientation of the single human-body target relative to the fan, the first orientation of the first human-body target relative to the fan or the second orientation of the second human-body target relative to the fan, in a flashing manner, so as to prompt a corresponding human body to increase a motion amplitude.

5. The method for controlling an air-blowing angle of a fan based on a human-body orientation according to claim 1, wherein the controlling the millimeter-wave radar unit to use the provided compensation error-correction mechanism to detect the first human-body target and the second human-body target located at the outermost edges of the two ends within the detection range thereof comprises steps of:
setting a first compensation error-correction window period;
recording the first orientation of the first human-body target relative to the fan and the second orientation of the second human-body target relative to the fan which are detected each time by the millimeter-wave radar unit;
performing countdown according to the first compensation error-correction window period, if a currently detected first orientation of the first human-body target relative to the fan is smaller than the first orientation recorded last time, or a currently detected second orientation of the second human-body target relative to the fan is smaller than the second orientation recorded last time, and replacing, when the countdown reaches zero, the first orientation recorded last time or the second orientation recorded last time with the currently detected first orientation or the currently detected second orientation; and
resetting the first compensation error-correction window period being counted down, if the currently detected first orientation of the first human-body target relative to the fan is larger than the first orientation recorded last time, or the currently detected second orientation of the second human-body target relative to the fan is larger than the second orientation recorded last time, and replacing the first orientation recorded last time or the second orientation recorded last time with the currently detected first orientation or the currently detected second orientation.

6. The method for controlling an air-blowing angle of a fan based on a human-body orientation according to claim 5, wherein the step of performing countdown according to the first compensation error-correction window period if the currently detected first orientation of the first human-body target relative to the fan is smaller than the first orientation recorded last time or the currently detected second orientation of the second human-body target relative to the fan is smaller than the second orientation recorded last time and replacing when the countdown reaches zero the first orientation recorded last time or the second orientation recorded last time with the currently detected first orientation or the currently detected second orientation comprises steps of:
performing countdown according to the first compensation error-correction window period, if the currently detected first orientation of the first human-body target relative to the fan is smaller than the first orientation recorded last time or the currently detected second orientation of the second human-body target relative to the fan is smaller than the second orientation recorded last time;
indicating, through the orientation indication unit, the first human-body target or the second human-body target to make body actions; and
if during the countdown to zero, the first human-body target or the second human-body target fails to make the body actions, replacing the first orientation recorded last time or the second orientation recorded last time with the currently detected first orientation or the currently detected second orientation.

7. The method for controlling an air-blowing angle of a fan based on a human-body orientation according to claim 5, wherein the controlling the millimeter-wave radar unit to use the provided compensation error-correction mechanism to detect the first human-body target and the second human-body target located at the outermost edges of the two ends within the detection range thereof further comprises steps of:
setting a second compensation error-correction window period;
checking whether the first human-body target and/or the second human-body target currently detected by the millimeter-wave radar unit are located at a detection boundary of the millimeter-wave radar unit; and
performing countdown according to the second compensation error-correction window period if the first human-body target and/or the second human-body target is located at the detection boundary, and discarding the currently detected first human-body target and/or second human-body target, if during the countdown to zero, the first human-body target and/or the second human-body target is stationary all the time, and performing detection again.

8. The method for controlling an air-blowing angle of a fan based on a human-body orientation according to any one of claims 1 to 7, wherein the sound source localization unit receives the set angle-correction voice instruction and re-determines the target orientation of the single human-body target relative to the fan, the first orientation of the first human-body target relative to the fan or the second orientation of the second human-body target relative to the fan, and the air-blowing angle of the fan is adjusted according to the target orientation, the first orientation, or the second orientation re-determined by the sound source localization unit.

9. The method for controlling an air-blowing angle of a fan based on a human-body orientation according to claim 8, before adjusting the air-blowing angle of the fan according to the target orientation, the first orientation, or the second orientation re-determined by the sound source localization unit, further comprising steps of:
setting an angle-correction threshold; and
comparing the target orientation, the first orientation, or the second orientation re-determined by the sound source localization unit for adjusting the air-blowing angle of the fan with the target orientation, the first orientation, or the second orientation detected by the millimeter-wave radar unit, and adjusting, if a difference between the two is greater than the angle-correction threshold, the air-blowing angle of the fan according to the target orientation, the first orientation, or the second orientation detected by the millimeter-wave radar unit.

10. An apparatus for controlling an air-blowing angle of a fan based on a human-body orientation, applicable to a fan provided with a millimeter-wave radar unit and a sound source localization unit, wherein the apparatus comprises:
a first adjustment module, configured to control, in response to a received single-person perception mode start instruction, the millimeter-wave radar unit to detect a single human-body target with a largest motion amplitude within a detection range thereof, and adjust the air-blowing angle of the fan based on a target orientation of the single human-body target relative to the fan;
a second adjustment module, configured to control, in response to a received multi-person perception mode start instruction, the millimeter-wave radar unit to use a provided compensation error-correction mechanism, to detect a first human-body target and a second human-body target located at outermost edges of two ends within the detection range thereof, and adjust the air-blowing angle of the fan based on a first orientation of the first human-body target relative to the fan and a second orientation of the second human-body target relative to the fan; and
a fine-adjustment module, configured to finely adjust the air-blowing angle of the fan according to an angle-correction voice instruction received by the sound source localization unit, after adjusting the air-blowing angle of the fan based on the target orientation of the single human-body target relative to the fan or based on the first orientation of the first human-body target relative to the fan and the second orientation of the second human-body target relative to the fan.

11. The apparatus for controlling an air-blowing angle of a fan based on a human-body orientation according to claim 10, wherein the apparatus further comprises:
a judgment module, configured to control the millimeter-wave radar unit to judge, when detecting the single human-body target, the first human-body target, or the second human-body target within the detection range thereof, whether a confidence degree of the detected single human-body target, the detected first human-body target or the detected second human-body target exceeds a set threshold; if yes, display, in the orientation indication unit, the target orientation of the single human-body target relative to the fan, the first orientation of the first human-body target relative to the fan or the second orientation of the second human-body target relative to the fan, in a constant-on manner; and if not, display, in the orientation indication unit, the target orientation of the single human-body target relative to the fan, the first orientation of the first human-body target relative to the fan or the second orientation of the second human-body target relative to the fan, in a flashing manner, so as to prompt a corresponding human body to increase a motion amplitude.

12. An electronic device, comprising: a processor, a memory and a bus, wherein the memory stores a machine-readable instruction executable by the processor, when the electronic device runs, the processor and the memory communicate with each other through the bus, and when the machine-readable instruction is executed by the processor, the method for controlling an air-blowing angle of a fan based on a human-body orientation according to any one of claims 1 to 9 is implemented.

13. A computer-readable storage medium, wherein the computer-readable storage medium stores a computer program, and when the computer program is executed by the processor, the method for controlling an air-blowing angle of a fan based on a human-body orientation according to any one of claims 1 to 9 is implemented.
